# EUROPEAN PATENT APPLICATION

(11) **EP 4 520 778 A1**
(43) Date of publication of application: **12.03.2025**
(21) Application number: 23799457.9
(22) Date of filing: 25.04.2023
(51) Int. Cl.: C08G 77/392, C07F 7/18, C08L 83/14

(54) **ORGANOPOLYSILOXANE CONTAINING MERCAPTO GROUP AND ALKOXYSILYL GROUP, AND COMPOSITION COMPRISING SAME**

(30) Priority: 02.05.2022 JP 2022076011
(71) Applicant: SHIN-ETSU CHEMICAL CO., LTD., Tokyo 1000005 (JP)
(72) Inventor: HIROKAMI Munenao, Annaka-shi, Gunma 379-0224 (JP)
(74) Representative: Mewburn Ellis LLP
(86) International application number: PCT/JP2023/016271
(87) International publication number: WO 2023/214526

(57) **Abstract**

Provided is an organopolysiloxane which is expressed by average compositional formula (1) and which comprises: a mercapto group-containing organic group; and a trialkoxysilyl group-containing organic group and/or a dialkoxymethylsilyl group-containing organic group. The organopolysiloxane exhibits low volatility and excellent adhesiveness and adhesion with respect to an inorganic base material.

(A)ₐ(B)_{b}(C)_{c}(D)_{d}SiO_{(4-a-b-c-d)/2} (1)

(In the formula, A represents a mercapto group-containing organic group, B represents a trialkoxysilyl group-containing organic group or a dialkoxymethylsilyl-containing organic group, C represents a hydrolyzable group, D represents a C1-12 alkyl group, a C1-10 haloalkyl group, or a C6-12 aryl group, and a, b, c, and d represent numbers that satisfy 0 < a < 1, 0 < b < 1, 0 < c < 3, 0 ≤ d < 1, and 0 < a+b+c+d < 4.)

## Description

### TECHNICAL FIELD

The present invention relates to an organopolysiloxane containing a mercapto group and an alkoxysilyl group and a composition containing the organopolysiloxane, and a composition containing the organopolysiloxane, and more particularly, to an organopolysiloxane that contains a hydrolytic condensate of an organosilicon compound containing a mercapto group as its main skeleton and that also contains a trialkoxysilyl group and/or a dialkoxysilyl group, and a composition containing the organopolysiloxane.

### BACKGROUND ART

Organosilicon compounds containing a mercapto group and a hydrolyzable silyl group have been widely used as adhesion promoters for inorganic substrates such as glass and metals (Patent Document 1), and 3-mercaptopropyltrimethoxysilane, 3-mercaptopropyldimethoxymethylsilane, and so forth have been commercially available.

However, 3-mercaptopropyltrimethoxysilane and 3-mercaptopropyldimethoxymethylsilane are low-molecular-weight components and thus has high volatility. As products with reduced volatility, oligomers obtained by (co)hydrolytic condensation of monomer components containing mercapto group-containing alkoxysilanes as described above have been known (Patent Document 2 to Patent Document 4). Examples of such products include KR-518 and KR-519 manufactured by Shin-Etsu Chemical Co., Ltd.

However, such oligomers obtained by (co)hydrolytic condensation of monomer components containing mercapto group-containing alkoxysilanes do not contain highly active trialkoxysilyl groups or dialkoxyorganosilyl groups, and thus may be insufficient in adhesiveness or adhesion to inorganic substrates such as glass and metals.

### PRIOR ART DOCUMENTS

### PATENT DOCUMENTS

Patent Document 1: JP 4692885
Patent Document 2: JP-A H07-292108
Patent Document 3: JP-A H09-111188
Patent Document 4: JP-A 2003-113243

### SUMMARY OF INVENTION

### TECHNICAL PROBLEM

The present invention has been made in view of the above circumstances. It is an object of the present invention to provide an organopolysiloxane having a mercapto group-containing organic group, the organopolysiloxane having low volatility and good adhesiveness and adhesion to an inorganic substrate, a method for producing the organopolysiloxane, and a composition containing the organopolysiloxane.

### SOLUTION TO PROBLEM

The present inventors have conducted intensive studies to achieve the above object and have found that a method for producing a low-volatility organopolysiloxane having a mercapto group-containing organic group and one of a trialkoxysilyl group and a dialkoxymethylsilyl group, and a resin composition, such as an epoxy resin composition containing this organopolysiloxane, provides excellent adhesion to an inorganic substrate. These findings have led to the completion of the present invention.

That is, the present invention provides the following.
1. An organopolysiloxane contains a mercapto group-containing organic group and one or both of a trialkoxysilyl group-containing organic group and a dialkoxymethylsilyl group-containing organic group.
2. The organopolysiloxane described in 1 is represented by the following average compositional formula (1):

   (A)ₐ(B)_{b}(C)_{c}(D)_{d}SiO_{(4-a-b-c-d)/2} (1)

   wherein A is a mercapto group-containing organic group, B is a trialkoxysilyl group-containing organic group or a dialkoxymethylsilyl group-containing organic group, C is a hydrolyzable group, D is an alkyl group having 1 to 12 carbon atoms, a haloalkyl group having 1 to 10 carbon atoms, or an aryl group having 6 to 12 carbon atoms, and a, b, c, and d are numbers satisfying 0 < a < 1,0 < b < 1, 0 < c < 3, 0 ≤ d < 1, and 0 < a+b+c+d < 4.
3. In the organopolysiloxane described in 2, the mercapto group-containing organic group is represented by the following formula (2):

   *-(CH₂)ₘ-SH (2)

   wherein m is an integer of 1 to 10, and *- is a bond, the trialkoxysilyl group-containing organic group or the dialkoxymethylsilyl group-containing organic group is represented by the following formula (3):

      *-(CH₂)ₘ-S-(CH₂)ₙ-Si(CH₃)₃₋ₖ(OR¹)ₖ (3)
   wherein m is an integer of 1 to 10, n is an integer of 1 to 10, each k is 2 or 3, each R¹ is independently an alkyl group having 1 to 20 carbon atoms, an aryl group having 6 to 10 carbon atoms, an aralkyl group having 7 to 10 carbon atoms, or an alkenyl group having 2 to 10 carbon atoms, and *- is a bond, and the hydrolyzable group is represented by the following formula (4):

      *-OR¹ (4)
   wherein R¹ is as defined above, and *- is a bond.
4. A method for producing the organopolysiloxane described in any one of 1 to 3 includes:
   reacting a hydrolytic condensate of a mercapto group-containing organosilicon compound represented by the following formula (5): 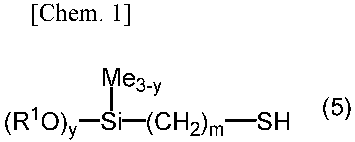
   wherein each R¹ is independently an alkyl group having 1 to 20 carbon atoms, an aryl group having 6 to 10 carbon atoms, an aralkyl group having 7 to 10 carbon atoms, or an alkenyl group having 2 to 10 carbon atoms, each y is an integer of 1 to 3, m is an integer of 1 to 10, and Me is a methyl group, and an alkenyl group-containing organosilicon compound represented by the following formula (7): 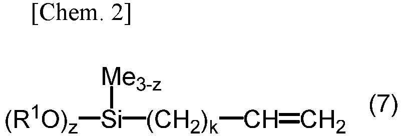
   wherein each R¹ is as defined above, k is an integer of 0 to 8, each z is 2 or 3, and Me is a methyl group.
5. A method for producing the organopolysiloxane described in any one of 1 to 3 includes:
   causing a co-hydrolytic condensate of a mercapto group-containing organosilicon compound represented by the following formula (5): 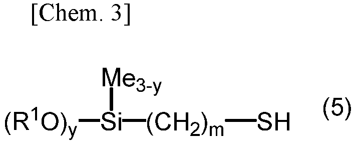
   wherein each R¹ is independently an alkyl group having 1 to 20 carbon atoms, an aryl group having 6 to 10 carbon atoms, an aralkyl group having 7 to 10 carbon atoms, or an alkenyl group having 2 to 10 carbon atoms, each y is an integer of 1 to 3, m is an integer of 1 to 10, and Me is a methyl group, and an organosilicon compound represented by the following formula (6):
      [Chem. 4]

      (R¹O)_{z}-Si-R³_{4-z} (6)
   wherein each R¹ is as defined above, each R³ is an alkyl group having 1 to 12 carbon atoms, a haloalkyl group having 1 to 10 carbon atoms, or an aryl group having 6 to 12 carbon atoms, and z is an integer of 1 to 4, to react with an alkenyl group-containing organosilicon compound represented by the following formula (7): 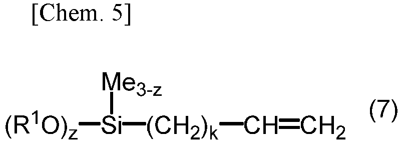
   wherein each R¹ is as defined above, k is an integer of 0 to 8, each z is 2 or 3, and Me is a methyl group.
6. A composition contains the organopolysiloxane described in any one of 1 to 3.

### ADVANTAGEOUS EFFECTS OF INVENTION

The organopolysiloxane of the present invention has low volatility and high adhesion and adhesiveness to an inorganic substrate, such as glass or metal, and is thus useful as an adhesion promoter.

### DESCRIPTION OF EMBODIMENTS

The present invention will be specifically described below.

An organopolysiloxane of the present invention has a mercapto group-containing organic group and one or both of a trialkoxysilyl group-containing organic group and a dialkoxymethylsilyl group-containing organic group. Specifically, an organopolysiloxane represented by the following average compositional formula (1) is preferred.

(A)ₐ(B)_{b}(C)_{c}(D)_{d}SiO_{(4-a-b-c-d)/2} (1)

In formula (1), A is a mercapto group-containing organic group, B is a trialkoxysilyl group-containing organic group or a dialkoxymethylsilyl group-containing organic group, C is a hydrolyzable group, D is an alkyl group having 1 to 12 carbon atoms, a haloalkyl group having 1 to 10 carbon atoms, or an aryl group having 6 to 12 carbon atoms, and a, b, c, and d are numbers satisfying 0 < a < 1,0 < b < 1, 0 < c < 3, 0 ≤ d < 1, and 0 < a+b+c+d < 4.

Here, each of a, b, c, and d indicates the average amount by mole of a corresponding one of the organic groups, based on 1 mole of silicon atoms.

More specifically, an organopolysiloxane is more preferred in which in formula (1), the mercapto group-containing organic group is represented by the following formula (2):

*-(CH₂)ₘ-SH (2)

wherein m is an integer of 1 to 10, and *- is a bond, the trialkoxysilyl group-containing organic group or the dialkoxymethylsilyl group-containing organic group is represented by the following formula (3):

   *-(CH₂)ₘ-S-(CH₂)ₙ-Si(CH₃)₃₋ₖ(OR¹)ₖ (3)
wherein m is an integer of 1 to 10, n is an integer of 1 to 10, each k is 2 or 3, each R¹ is independently an alkyl group having 1 to 20 carbon atoms, an aryl group having 6 to 10 carbon atoms, an aralkyl group having 7 to 10 carbon atoms, or an alkenyl group having 2 to 10 carbon atoms, and *- is a bond, and the hydrolyzable group is represented by the following formula (4):

   *-OR¹ (4)
wherein R¹ is as defined above, and *- is a bond.

Regarding R¹ in each of formulae (3) and (4) above, specific examples of the alkyl group having 1 to 20 carbon atoms include methyl, ethyl, n-propyl, n-butyl, n-hexyl, n-octyl, n-decyl, and octadecyl groups. Specific examples of the aryl group having 6 to 10 carbon atoms include phenyl, tolyl, and naphthyl groups. A specific example of the aralkyl group having 7 to 10 carbon atoms is a benzyl group. Examples of the alkenyl group having 2 to 10 carbon atoms include vinyl, propenyl, and pentenyl groups.

Regarding D in the above formula (1), specific examples of the alkyl group having 1 to 12 carbon atoms include methyl, ethyl, n-propyl, n-butyl, n-hexyl, n-octyl, and n-decyl groups. Specific examples of the haloalkyl group having 1 to 10 carbon atoms include 1-chloromethyl, 3-chloropropyl, 6-chlorohexyl, 8-chlorooctyl, 1-bromomethyl, 3-bromopropyl, 6-bromohexyl, and 8-bromooctyl groups. Specific examples of the aryl group having 6 to 12 carbon atoms include phenyl, tolyl, styryl, naphthyl, and diphenyl groups.

Specific examples of the mercapto group-containing organic group represented by the above formula (2) include the following groups:

*-CH₂SH ,

*-C₂H₄SH ,

*-C₃H₆SH ,

*-C₄H₈SH ,

*-C₅H₁₀SH ,

*-C₆H₁₂SH ,

*-C₇H₁₄SH ,

*-C₈H₁₆SH ,

*-C₉H₁₈SH,

and

*-C₁₀H₂₀SH

wherein each *- is a bond, and the same applies below.

Specific examples of the trialkoxysilyl group-containing organic group or the dialkoxymethylsilyl group-containing organic group represented by the above formula (3) include the following groups:

*-C₃H₆-S-C₂H₄-Si(OCH₃)₃ ,

*-C₃H₆-S-C₂H₄-SiCH₃(OCH₃)₂ ,

*-C₃H₆-S-C₂H₄-Si(OC₂H₅)₃ ,

* -C₃H₆-S-C₂H₄-SiCH₃(OC₂H₅)₂ ,

*-C₃H₆-S-C₆H₁₂-Si(OCH₃)₃ ,

*-C₃H₆-S-C₆H₁₂-SiCH₃(OCH₃)₂ ,

*-C₃H₆-S-C₆H₁₂-Si(OC₂H₅)₃ ,

*-C₃H₆-S-C₆H₁₂-SiCH₃(OC₂H₅)₂ ,

*-C₃H₆-S-C₈H₁₆-Si(OCH₃)₃ ,

*-C₃H₆-S-C₈H₁₆-SiCH₃(OCH₃)₂ ,

*-C₃H₆-S-C₈H₁₆-Si(OC₂H₅)₃ ,

*-C₃H₆-S-C₈H₁₆-SiCH₃(OC₂H₅)₂ ,

*-CH₂-S-C₂H₄-Si(OCH₃)₃ ,

*-CH₂-S-C₂H₄-SiCH₃(OCH₃)₂ ,

*-CH₂-S-C₂H₄-Si(OC₂H₅)₃ ,

*-CH₂-S-C₂H₄-SiCH₃(OC₂H₅)₂ ,

*-CH₂-S-C₆H₁₂-Si(OCH₃)₃ ,

*-CH₂-S-C₆H₁₂-SiCH₃(OCH₃)₂ ,

*-CH₂-S-C₆H₁₂-Si(OC₂H₅)₃ ,

*-CH₂-S-C₆H₁₂-SiCH₃(OC₂H₅)₂ ,

*-CH₂-S-C₈H₁₆-Si(OCH₃)₃ ,

*-CH₂-S-C₈H₁₆-SiCH₃(OCH₃)₂ ,

*-CH₂-S-C₈H₁₆-Si(OC₂H₅)₃ ,

and

*-CH₂-S-C₈H₁₆-SiCH₃(OC₂H₅)₂ .

Specific examples of the hydrolyzable group represented by the above formula (4) include the following groups:

*-OCH₃ ,

*-OC₂H₅ ,

*-OC₃H₇,

*-OC₄H₉ ,

and

*-OC₅H₁₁ .

The organopolysiloxane of the present invention can be produced by reacting a hydrolytic condensate of a mercapto group-containing organosilicon compound represented by formula (5) below and an alkenyl group-containing organosilicon compound represented by formula (7) below, or by causing a co-hydrolytic condensate of a mercapto group-containing organosilicon compound represented by formula (5) below and an organosilicon compound represented by formula (6) below to react with an alkenyl group-containing organosilicon compound represented by formula (7) below. 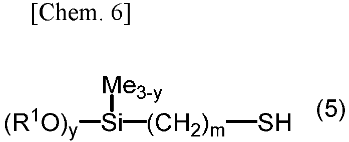 wherein each R¹ and m are as defined above, each y is an integer of 1 to 3, and Me is a methyl group. 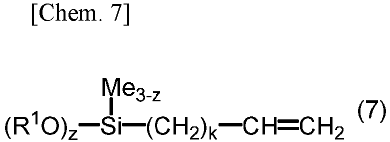 wherein each R¹ is as defined above, k is an integer of 0 to 8, each z is 2 or 3, and Me is a methyl group.
[Chem. 8]

(R¹O)_{z}-Si-R³_{4-z} (6)

wherein each R¹ is as defined above, each R³ is an alkyl group having 1 to 12 carbon atoms, a haloalkyl group having 1 to 10 carbon atoms, or an aryl group having 6 to 12 carbon atoms, and each z is an integer of 1 to 4.

Regarding R³ in the above formula (6), specific examples of the alkyl group having 1 to 12 carbon atoms include methyl, ethyl, n-propyl, n-butyl, n-hexyl, n-octyl, and n-decyl groups. Specific examples of the haloalkyl group having 1 to 10 carbon atoms include 1-chloromethyl, 3-chloropropyl, 6-chlorohexyl, 8-chlorooctyl, 1-bromomethyl, 3-bromopropyl, 6-bromohexyl, and 8-bromooctyl groups. Specific examples of the aryl group having 6 to 12 carbon atoms include phenyl, tolyl, styryl, naphthyl, and diphenyl groups.

Specific examples of the organosilicon compound represented by the above formula (5) include α-mercaptomethyltrimethoxysilane, α-mercaptomethylmethyldimethoxysilane, α-mercaptomethyltriethoxysilane, α-mercaptomethylmethyldiethoxysilane, γ-mercaptopropyltrimethoxysilane, γ-mercaptopropylmethyldimethoxysilane, γ-mercaptopropyltriethoxysilane, and γ-mercaptopropylmethyldiethoxysilane.

Specific examples of the organosilicon compound represented by the above formula (6) include alkyl group-containing organosilicon compounds, such as methyltrimethoxysilane, dimethyldimethoxysilane, methyltriethoxysilane, dimethyldiethoxysilane, ethyltrimethoxysilane, ethylmethyldimethoxysilane, ethyltriethoxysilane, ethylmethyldiethoxysilane, butyltrimethoxysilane, butylmethyldimethoxysilane, butyltriethoxysilane, butylmethyldiethoxysilane, hexyltrimethoxysilane, hexylmethyldimethoxysilane, hexyltriethoxysilane, hexylmethyldiethoxysilane, octyltrimethoxysilane, octylmethyldimethoxysilane, octyltriethoxysilane, octylmethyldiethoxysilane, decyltrimethoxysilane, decylmethyldimethoxysilane, decyltriethoxysilane, and decylmethyldiethoxysilane; aryl group-containing organosilicon compounds, such as phenyltrimethoxysilane, diphenyldimethoxysilane, phenyltriethoxysilane, diphenyldiethoxysilane, p-styryltrimethoxysilane, p-styrylmethyldimethoxysilane, p-styryltriethoxysilane, and p-styrylmethyldiethoxysilane; halogenated alkyl group-containing organosilicon compounds, such as 1-chloromethyltrimethoxysilane, 1-chloromethylmethyldimethoxysilane, 1-chloromethyltriethoxysilane, 1-chloromethylmethyldiethoxysilane, 3-chloropropyltrimethoxysilane, 3-chloropropylmethyldimethoxysilane, 3-chloropropyltriethoxysilane, 3-chloropropylmethyldiethoxysilane, 6-chlorohexyltrimethoxysilane, 6-chlorohexylmethyldimethoxysilane, 6-chlorohexyltriethoxysilane, 6-chlorohexylmethyldiethoxysilane, 8-chlorooctyltrimethoxysilane, 8-chlorooctylmethyldimethoxysilane, 8-chlorooctyltriethoxysilane, 8-chlorooctylmethyldiethoxysilane, 1-bromomethyltrimethoxysilane, 1-bromomethylmethyldimethoxysilane, 1-bromomethyltriethoxysilane, 1-bromomethylmethyldiethoxysilane, 3-bromopropyltrimethoxysilane, 3-bromopropylmethyldimethoxysilane, 3-bromopropyltriethoxysilane, 3-bromopropylmethyldiethoxysilane, 6-bromohexyltrimethoxysilane, 6-bromohexylmethyldimethoxysilane, 6-bromohexyltriethoxysilane, 6-bromohexylmethyldiethoxysilane, 8-bromooctyltrimethoxysilane, 8-bromooctylmethyldimethoxysilane, 8-bromooctyltriethoxysilane, and 8-bromooctylmethyldiethoxysilane; and tetraalkoxysilanes, such as tetramethoxysilane, tetraethoxysilane, and tetrabutoxysilane.

Specific examples of the alkenyl group-containing organosilicon compound represented by the above formula (7) include vinyltrimethoxysilane, vinylmethyldimethoxysilane, vinyltriethoxysilane, vinylmethyldiethoxysilane, allyltrimethoxysilane, allylmethyldimethoxysilane, allyltriethoxysilane, allylmethyldiethoxysilane, hexenyltrimethoxysilane, hexenylmethyldimethoxysilane, hexenyltriethoxysilane, hexenylmethyldiethoxysilane, octenyltrimethoxysilane, octenylmethyldimethoxysilane, octenyltriethoxysilane, and octenylmethyldiethoxysilane.

The hydrolytic condensate of the mercapto group-containing organosilicon compound represented by the above formula (5), or the co-hydrolytic condensate of the mercapto group-containing organosilicon compound represented by the above formula (5) and the organosilicon compound represented by the above formula (6) can be produced by a known method using a hydrolysis-condensation catalyst.

As the hydrolysis-condensation catalyst, various known catalysts can be used. Specific examples thereof include organic acids, such as acetic acid, butyric acid, maleic acid, and citric acid; inorganic acids, such as hydrochloric acid, nitric acid, phosphoric acid, and sulfuric acid; basic compounds, such as triethylamine; organometallic salts, such as tetrabutyl titanate and dibutyltin dilaurate; and fluorine-containing compounds, such as KF and NH₄F. These may be used alone or in combination of two or more.

The amount of the catalyst used is preferably in the range of 0.0001 to 1 mol% based on the total reaction components.

The amount of water used in a hydrolysis and condensation reaction can be adjusted in accordance with the desired degree of polymerization, and is usually preferably 0.5 to 0.99 mol, more preferably 0.66 to 0.90 mol, based on 1 mol of the total hydrolyzable silyl groups.

In the hydrolysis and condensation reaction, a solvent may be used, if necessary.

Examples of a solvent that can be used include alcohols, such as methanol, ethanol, isopropanol, and tert-butanol; ketones, such as acetone and methyl isobutyl ketone; ethers, such as dibutyl ether; esters, such as ethyl acetate; and aromatics, such as toluene. Among these, alcohols, such as methanol and ethanol, are preferred.

The reaction of the hydrolytic condensate of the mercapto group-containing organosilicon compound represented by the above formula (5) or the co-hydrolytic condensate of the mercapto group-containing organosilicon compound represented by the above formula (5) and the organosilicon compound represented by the above formula (6) with the vinyl group-containing organosilicon compound represented by the above formula (7) can be performed using a known ene-thiol reaction technique.

In the ene-thiol reaction, a catalyst, such as an organic peroxide or an azo compound, may be used, if necessary.

Specific examples of the organic peroxide include benzoyl peroxide, cumene hydroperoxide, di-tert-butyl peroxide, tert-butyl hydroperoxide, and dicumyl peroxide.

Specific examples of the azo compound include 2,2'-azobispropane, 2,2'-dichloro-2,2'-azobispropane, 1,1'-azo(methylethyl) diacetate, 2,2'-azobisisobutane, 2,2'-azobisisobutyramide, 2,2'-azobisisobutyronitrile (AIBN), methyl 2,2'-azobis-2-methylpropionate), 2,2'-dichloro-2,2'-azobisbutane, 2,2'-azobis-2-methylbutyronitrile, dimethyl 2,2'-azobisisobutyrate, 3,5-dihydroxymethylphenylazo-2-methylmalonodinitrile, 2,2'-azobis-2-methylvaleronitrile, dimethyl 4,4'-azobis-4-cyanovalerate), and 2,2'-azobis-2,4-dimethylvaleronitrile.

The amount of the catalyst used is preferably 0.00001 to 10 parts by weight based on 100 parts by weight of the total amount of the hydrolytic condensate of the mercapto group-containing organosilicon compound represented by the above formula (5) or the co-hydrolytic condensate of the mercapto group-containing organosilicon compound represented by the above formula (5) and the organosilicon compound represented by the above formula (6), and the alkenyl group-containing organosilicon compound represented by the above formula (7).

In the ene-thiol reaction, a solvent may be used as necessary.

Examples of the solvent that can be used include alcohols, such as methanol, ethanol, isopropanol, and tert-butanol; ketones, such as acetone and methyl isobutyl ketone; ethers, such as dibutyl ether; esters, such as ethyl acetate; aromatics, such as toluene; and hydrocarbons, such as hexane and decane.

The reaction temperature for the ene-thiol reaction is preferably in the range of 0°C to 200°C, more preferably 50°C to 150°C, from the viewpoint of inhibiting volatilization of the vinyl group-containing organosilicon compound represented by the above formula (7).

The organopolysiloxane of the present invention is suitably used as an adhesion promoter for an inorganic substrate, such as glass or metal.

The organopolysiloxane of the present invention can be used as a composition containing, for example, any of various resins to which the organopolysiloxane has been added.

Examples of the resin include, but are not particularly limited to, a polymethyl methacrylate resin, a polyethylene terephthalate resin, a polybutylene terephthalate resin, a polyethylene naphthalate resin, an ABS resin, a polycarbonate resin, a polystyrene resin, an epoxy resin, an unsaturated polyester resin, a melamine resin, a diallyl phthalate resin, a polyimide resin, a urethane resin, a nylon resin, a polyethylene resin, a polypropylene resin, a polyvinyl chloride resin, and a fluororesin. In particular, the resin is preferably used as an additive for an epoxy resin.

The amount of the organopolysiloxane added is not limited as long as the effect of promoting adhesion is provided, but is preferably in the range of 0.01 to 10 wt%, more preferably 0.1 to 5 wt%, and still more preferably 0.2 to 3 wt%, in the composition.

The composition of the present invention may contain other additives as long as they do not impair the performance of the composition. Examples of other additives include curing catalysts, release agents, flame retardants, ion-trapping agents, antioxidants, adhesiveness-imparting agents, stress-reducing agents, and colorants. The amount of other additives used is not limited as long as they do not impair the performance of the composition, but is preferably in the range of 0.01 to 10 wt%, more preferably 0.1 to 5 wt%, and still more preferably 0.5 to 5 wt% in the composition.

### EXAMPLES

Hereinafter, the present invention is described in more detail with reference to Synthesis Examples, Examples, and Comparative Examples, but the present invention is not limited to these Examples. In each of the following Examples, an average molecular weight refers to the weight-average molecular weight in terms of polystyrene measured by gel permeation chromatography.

### [Synthesis Example 1]

Into a 1-L separable flask equipped with a stirrer, a reflux condenser, a dropping funnel, and a thermometer, 786 g (4.0 mol) of 3-mercaptopropyltrimethoxysilane (KBM-803, manufactured by Shin-Etsu Chemical Co., Ltd.) and 100 g of methanol were placed. Then 63 g of 0.5 N aqueous hydrochloric acid (3.5 mol of water) was added dropwise at room temperature. The mixture was stirred at 80°C for 10 hours and then cooled to room temperature. To the mixture, 3.0 g of propylene oxide was added dropwise. The mixture was stirred at room temperature for 1 hour. The reaction solution was subjected to evaporation under reduced pressure and then filtration to give 620 g of Silicone Oligomer 1 as a colorless, transparent liquid. The results of GPC measurement of the resulting Silicone Oligomer 1 indicated that Silicone Oligomer 1 had an average molecular weight of 1,250 and a mercapto equivalent of 156 g/ mol and was represented by the following average compositional formula.

(-C₃H₆-SH)_{1.00}(CH₃O)_{1.25}SiO_{0.875}

### [Synthesis Example 2]

Into a 1-L separable flask equipped with a stirrer, a reflux condenser, a dropping funnel, and a thermometer, 393 g (2.0 mol) of 3-mercaptopropyltrimethoxysilane (KBM-803, manufactured by Shin-Etsu Chemical Co., Ltd.), 329 g (2.0 mol) of propyltrimethoxysilane (KBM-3033, manufactured by Shin-Etsu Chemical Co., Ltd.), and 100 g of methanol were placed. Then 63 g of 0.5 N aqueous hydrochloric acid (3.5 mol of water) was added dropwise at room temperature. The mixture was stirred at 80°C for 10 hours and then cooled to room temperature. To the mixture, 3.0 g of propylene oxide was added dropwise. The mixture was stirred at room temperature for 1 hour. The reaction solution was subjected to evaporation under reduced pressure and then filtration to give 560 g of Silicone Oligomer 2 as a colorless, transparent liquid. The results of GPC measurement of the resulting Silicone Oligomer 2 indicated that Silicone Oligomer 2 had an average molecular weight of 1,100 and a mercapto equivalent of 275 g/mol and was represented by the following average compositional formula.

(-C₃H₆-SH)_{0.50}(-C₃H₇)_{0.50}(CH₃O)_{1.25}SiO_{0.875}

### [Example 1-1]

Into a 1-L separable flask equipped with a stirrer, a reflux condenser, a dropping funnel, and a thermometer, 312 g (2 mol as mercapto groups) of Oligomer 1 prepared in Synthesis Example 1 and 148 g (1.0 mol) of vinyltrimethoxysilane (Shin-Etsu Chemical Co., Ltd., KBM-1003) were placed. Then 0.1 g of a peroxyester compound (Perbutyl O, manufactured by NOF Corporation) was added at 90°C. The mixture was stirred at 90°C for 3 hours. The resulting reaction solution was subjected to evaporation under reduced pressure and then filtration to give 450 g of Organopolysiloxane (i) as a colorless, transparent liquid. The results of GPC measurement of the resulting Organopolysiloxane (i) indicated that Organopolysiloxane (i) had an average molecular weight of 1,850 and a mercapto equivalent of 463 g/mol and was represented by the following average compositional formula.

(-C₃H₆-SH)_{0.50}(-C₃H₆-S-C₂H₄-Si(OCH₃)₃)_{0.50}(CH₃O)_{1.25}SiO_{0.875}

### [Example 1-2]

Into a 1-L separable flask equipped with a stirrer, a reflux condenser, a dropping funnel, and a thermometer, 312 g (2 mol as mercapto groups) of Oligomer 1 prepared in Synthesis Example 1 and 74 g (0.5 mol) of vinyltrimethoxysilane (Shin-Etsu Chemical Co., Ltd., KBM-1003) were placed. Then 0.1 g of a peroxyester compound (Perbutyl O, manufactured by NOF Corporation) was added at 90°C. The mixture was stirred at 90°C for 3 hours. The resulting reaction solution was subjected to evaporation under reduced pressure and then filtration to give 380 g of Organopolysiloxane (ii) as a colorless, transparent liquid. The results of GPC measurement of the resulting Organopolysiloxane (ii) indicated that Organopolysiloxane (ii) had an average molecular weight of 1,550 and a mercapto equivalent of 257 g/mol and was represented by the following average compositional formula.

(-C₃H₆-SH)_{0.75}(-C₃H₆-S-C₂H₄-Si(OCH₃)₃)_{0.25}(CH₃O)_{1.25}SiO_{0.875}

### [Example 1-3]

Into a 1-L separable flask equipped with a stirrer, a reflux condenser, a dropping funnel, and a thermometer, 312 g (2 mol as mercapto groups) of Oligomer 2 prepared in Synthesis Example 2 and 66 g (0.5 mol) of vinyldimethoxysilane (Shin-Etsu Chemical Co., Ltd., KBM-1012) were placed. Then 0.1 g of a peroxyester compound (NOF Corporation, Perbutyl O) was added at 90°C. The mixture was stirred at 90°C for 3 hours. The resulting reaction solution was subjected to evaporation under reduced pressure and then filtration to give 370 g of Organopolysiloxane (iii) as a colorless, transparent liquid. The results of GPC measurement of the resulting Organopolysiloxane (iii) indicated that Organopolysiloxane (iii) had an average molecular weight of 1,500 and a mercapto equivalent of 252 g/mol and was represented by the following average compositional formula.

(-C₃H₆-SH)_{0.75}(-C₃H₆-S-C₂H₄-SiCH₃(OCH₃)₂)_{0.25}(CH₃O)_{1.25}SiO_{0.875}

### [Example 1-4]

Into a 1-L separable flask equipped with a stirrer, a reflux condenser, a dropping funnel, and a thermometer, 312 g (2 mol as mercapto groups) of Oligomer 1 prepared in Synthesis Example 1 and 116 g (0.5 mol) of octenyltrimethoxysilane (Shin-Etsu Chemical Co., Ltd., KBM-1083) were placed. Then 0.1 g of a peroxyester compound (Perbutyl O, manufactured by NOF Corporation) was added at 90°C. The mixture was stirred at 90°C for 3 hours. The resulting reaction solution was subjected to evaporation under reduced pressure and then filtration to give 420 g of Organopolysiloxane (iv) as a colorless, transparent liquid. The results of GPC measurement of the resulting Organopolysiloxane (iv) indicated that Organopolysiloxane (iv) had an average molecular weight of 1,700 and a mercapto equivalent of 285 g/mol and was represented by the following average compositional formula.

(-C₃H₆-SH)_{0.75}(-C₃H₆-S-C₈H₁₆-Si(OCH₃)₃)_{0.25}(CH₃O)_{1.25}SiO_{0.875}

### [Example 1-5]

Into a 1-L separable flask equipped with a stirrer, a reflux condenser, a dropping funnel, and a thermometer, 550 g (2 mol as mercapto groups) of Oligomer 2 prepared in Synthesis Example 2 and 74 g (0.5 mol) of vinyltrimethoxysilane (KBM-1003, manufactured by Shin-Etsu Chemical Co., Ltd.) were placed. Then 0.1 g of a peroxyester compound (NOF Corporation, Perbutyl O) was added at 90°C. The mixture was stirred at 90°C for 3 hours. The resulting reaction solution was subjected to evaporation under reduced pressure and then filtration to give 615 g of Organopolysiloxane (v) as a colorless, transparent liquid. The results of GPC measurement of the resulting Organopolysiloxane (v) indicated that Organopolysiloxane (v) had an average molecular weight of 1,300 and a mercapto equivalent of 416 g/mol and was represented by the following average compositional formula.

(-C₃H₆-SH)_{0.375}(-C₃H₆-S-C₂H₄-Si(OCH₃)₃)_{0.125}(-C₃H₇)_{0.50}(CH₃O)_{1.25}SiO_{0.875}

### [Evaluation of Volatility of Organopolysiloxane]

The volatility of Organopolysiloxanes (i) to (v) prepared in Examples 1-1 to 1-5, Silicone Oligomers 1 and 2 prepared in Synthesis Examples 1 and 2, and 3-mercaptopropyltrimethoxysilane (KBM-803, manufactured by Shin-Etsu Chemical Co., Ltd.) was evaluated. The evaluation method was as follows: 1 g of a compound was dropped onto an aluminum petri dish. The dish was allowed to stand in an open system in a thermostatic chamber at 105°C for 3 hours. The residual weight percentage (%) was evaluated as a non-volatile content. A higher non-volatile content indicates that the compound has lower volatility. The evaluation results are shown in Table 1.

**[Table 1]**

| Compound | Non-volatile content (%) |
|---|---|
| Organopolysiloxane (i) | >99 |
| Organopolysiloxane (ii) | >99 |
| Organopolysiloxane (iii) | >99 |
| Organopolysiloxane (iv) | >99 |
| Organopolysiloxane (v) | >99 |
| Silicone Oligomer 1 | 98 |
| Silicone Oligomer 2 | 98 |
| KBM-803 | 0 |

### [Examples 2-1 to 2-5 and Comparative Examples 2-1 to 2-3]

Organopolysiloxanes (i) to (v) prepared in Examples 1-1 to 1-5, Silicone Oligomers 1 and 2 prepared in Synthesis Examples 1 and 2, and 3-mercaptopropyltrimethoxysilane (KBM-803, manufactured by Shin-Etsu Chemical Co., Ltd.) were added to an epoxy resin (YDPN638, manufactured by Nippon Steel & Sumikin Chemical Co., Ltd., catalyst: 2-methylimidazole) in amounts given in Table 2 to prepare compositions.

Each of the compositions prepared above was applied onto a glass plate to a thickness of 10 µm with a bar coater and cured at 150°C for 1 hour, thereby producing a cured film. The adhesion of the resulting cured film was evaluated by a crosscut peel test in accordance with JIS K 5400, and expressed as (the number of remaining squares after the peel test)/100.

**[Table 2]**

| | | Example | | | | | Comparative Example | | |
|---|---|---|---|---|---|---|---|---|---|
| | | 2-1 | 2-2 | 2-3 | 2-4 | 2-5 | 2-1 | 2-2 | 2-3 |
| | Epoxy resin | 98 | 98 | 98 | 98 | 98 | 98 | 98 | 98 |
| | Catalyst | 2 | 2 | 2 | 2 | 2 | 2 | 2 | 2 |
| | Organopolysiloxane (i) | 0.5 | - | - | - | - | - | - | - |
| | Organopolysiloxane (ii) | - | 0.5 | - | - | - | - | - | - |
| Composition (pbw) | Organopolysiloxane (iii) | - | - | 0.5 | - | - | - | - | - |
| | Organopolysiloxane (iv) | - | - | - | 0.5 | - | - | - | - |
| | Organopolysiloxane (v) | - | - | - | - | 0.5 | - | - | - |
| | Silicone Oligomer 1 | - | - | - | - | - | 0.5 | - | - |
| | Silicone Oligomer 2 | - | - | - | - | - | - | 0.5 | - |
| | KBM-803 | - | - | - | - | - | - | - | 0.5 |
| Adhesion (number of remaining squares) | | 100 | 100 | 100 | 100 | 100 | 90 | 90 | 90 |

Tables 1 and 2 indicate that the organopolysiloxanes of the present invention have low volatility and also provide excellent adhesion when added to a resin, such as an epoxy resin.

## Claims

1. An organopolysiloxane, comprising a mercapto group-containing organic group and one or both of a trialkoxysilyl group-containing organic group and a dialkoxymethylsilyl group-containing organic group.

2. The organopolysiloxane according to claim 1, wherein the organopolysiloxane is represented by the following average compositional formula (1):
(A)ₐ(B)_{b}(C)_{c}(D)_{d}SiO_{(4-a-b-c-d)/2} (1)
wherein A is a mercapto group-containing organic group, B is a trialkoxysilyl group-containing organic group or a dialkoxymethylsilyl group-containing organic group, C is a hydrolyzable group, D is an alkyl group having 1 to 12 carbon atoms, a haloalkyl group having 1 to 10 carbon atoms, or an aryl group having 6 to 12 carbon atoms, and a, b, c, and d are numbers satisfying 0 < a < 1, 0 < b < 1, 0 < c < 3, 0 ≤ d < 1, and 0 < a+b+c+d < 4.

3. The organopolysiloxane according to claim 2, wherein the mercapto group-containing organic group is represented by the following formula (2):
*-(CH₂)ₘ-SH (2)
wherein m is an integer of 1 to 10, and *- is a bond,
the trialkoxysilyl group-containing organic group or the dialkoxymethylsilyl group-containing organic group is represented by the following formula (3):
*-(CH₂)ₘ-S-(CH₂)ₙ-Si(CH₃)₃₋ₖ(OR¹)ₖ (3)
wherein m is an integer of 1 to 10, n is an integer of 1 to 10, each k is 2 or 3, each R¹ is independently an alkyl group having 1 to 20 carbon atoms, an aryl group having 6 to 10 carbon atoms, an aralkyl group having 7 to 10 carbon atoms, or an alkenyl group having 2 to 10 carbon atoms, and *- is a bond, and
the hydrolyzable group is represented by the following formula (4):
*-OR¹ (4)
wherein R¹ is as defined above, and *- is a bond.

4. A method for producing the organopolysiloxane according to any one of claims 1 to 3, comprising:
reacting a hydrolytic condensate of a mercapto group-containing organosilicon compound represented by the following formula (5): 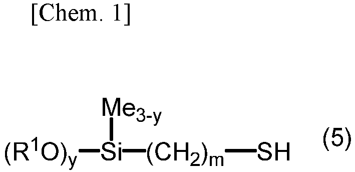
wherein each R¹ is independently an alkyl group having 1 to 20 carbon atoms, an aryl group having 6 to 10 carbon atoms, an aralkyl group having 7 to 10 carbon atoms, or an alkenyl group having 2 to 10 carbon atoms, each y is an integer of 1 to 3, m is an integer of 1 to 10, and Me is a methyl group, and an alkenyl group-containing organosilicon compound represented by the following formula (7): 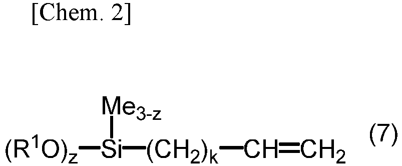
wherein each R¹ is as defined above, k is an integer of 0 to 8, each z is 2 or 3, and Me is a methyl group.

5. A method for producing the organopolysiloxane according to any one of claims 1 to 3, comprising:
causing a co-hydrolytic condensate of a mercapto group-containing organosilicon compound represented by the following formula (5): 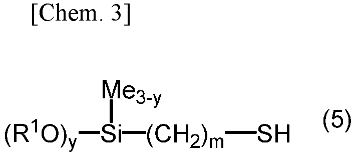
wherein each R¹ is independently an alkyl group having 1 to 20 carbon atoms, an aryl group having 6 to 10 carbon atoms, an aralkyl group having 7 to 10 carbon atoms, or an alkenyl group having 2 to 10 carbon atoms, and Me is a methyl group, and an organosilicon compound represented by the following formula (6):
[Chem. 4]
(R¹O)_{z}-Si-R³_{4-z} (6)
wherein each R¹ is as defined above, each R³ is an alkyl group having 1 to 12 carbon atoms, a haloalkyl group having 1 to 10 carbon atoms, or an aryl group having 6 to 12 carbon atoms, and each z is an integer of 1 to 4, to react with an alkenyl group-containing organosilicon compound represented by the following formula (7):
[Chem. 5] 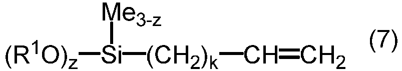
wherein each R¹ is as defined above, k is an integer of 0 to 8, each z is 2 or 3, and Me is a methyl group.

6. A composition, comprising the organopolysiloxane according to any one of claims 1 to 3.
